# EUROPEAN PATENT SPECIFICATION

(11) **EP 1 579 133 B1**
(45) Date of publication and mention of the grant of the patent: **30.03.2011**
(21) Application number: 03789573.7
(22) Date of filing: 19.12.2003
(51) Int. Cl.: F16K 15/14, E03C 1/298

(54) **FLUID CONTROL VALVE**
FLUIDSTEUERVENTIL
CLAPET DE COMMANDE DE LIQUIDE

(30) Priority: 23.12.2002 ZA 200208635
(43) Date of publication of application: 28.09.2005
(73) Proprietor: Dahm, Peter Kasper, Johannesburg 2192, Gauteng Province (ZA)
(72) Inventor: Dahm, Peter Kasper, Johannesburg 2192, Gauteng Province (ZA)
(74) Representative: Büchel, von Révy & Partner
(86) International application number: PCT/IB2003/006080
(87) International publication number: WO 2004/059198

(56) References cited:
- EP-A- 1 174 549
- GB-A- 754 497
- GB-A- 2 296 309
- GB-A- 2 346 198
- GB-A- 2 352 497
- US-A- 803 979
- US-A- 3 463 159
- US-A- 4 084 606
- US-A- 4 227 533

## Description

This invention relates to a fluid control valve and more particularly to a valve suitable to permit gravitationally induced flow only.

Valves of this kind find particufar application in permitting liquid flow in one direction and preventing gaseous flow in the opposite direction. A prime application for such a valve is in urinal installations. Here it is necessary to permit urine flow through the valve into a sewerage system while preventing reverse flow at malodorous gas in the reverse direction.

Valves for the above purpose have been designed which include some or other liquids trap but these suffer well known disadvantages such as loss of liquid or contamination of the liquids and precipitation of solids with consequent blocking.

Later developments have brought about the use of a flattened flexible and preferably resilient tube extending from a wide inlet section. Those were developed from drain-tube valves used in watercraft especially power boats. The valves known to the applicant have been described in US Patent No US 6,401,266 and Netherlands Patent No. NL 1015745C.

Both of these valves suffer from the build-up of deposits in the bends along the edges of the flattened tube where they are least resilient. This build-up is also difficult to remove because of this lack of resilience. Further as the build-up develops it opens the tube until a stage is reached where the valve no longer seals against a backflow of gas.

Further valves of this type are know from the documents EP 1174549, JP 49005434B and JP 5090063 U.

This is highly undesirable in urinal applications of the valve. In any event they are difficult to manufacture.

The known valve also suffers from an inward longitudinal collapse under too high pressure differentials which cannot easily be designed against while maintaining a desired sensitivity for operation.

It is the object of the present invention to provide a valve of the kind above generally described which will at least to some extent overcome the disadvantages set forth:

The object of this invention is solved by the features of claim 1.

Further features of the invention according to dependent claim provide for the complementary component to . be a mirror image of an identical construction and for the self-supporting ends of those components to be secured together.

The invention also provides for the control to be effected by a comparatively rigid member providing outwardly projecting ribs down the junction of the trough shaped section to the flat strip or by a rigid flat member providing the surface or surfaces against which at least part of the components can seal.

These and other features of the invention will become apparent from the following description with reference to the accompanying drawings.

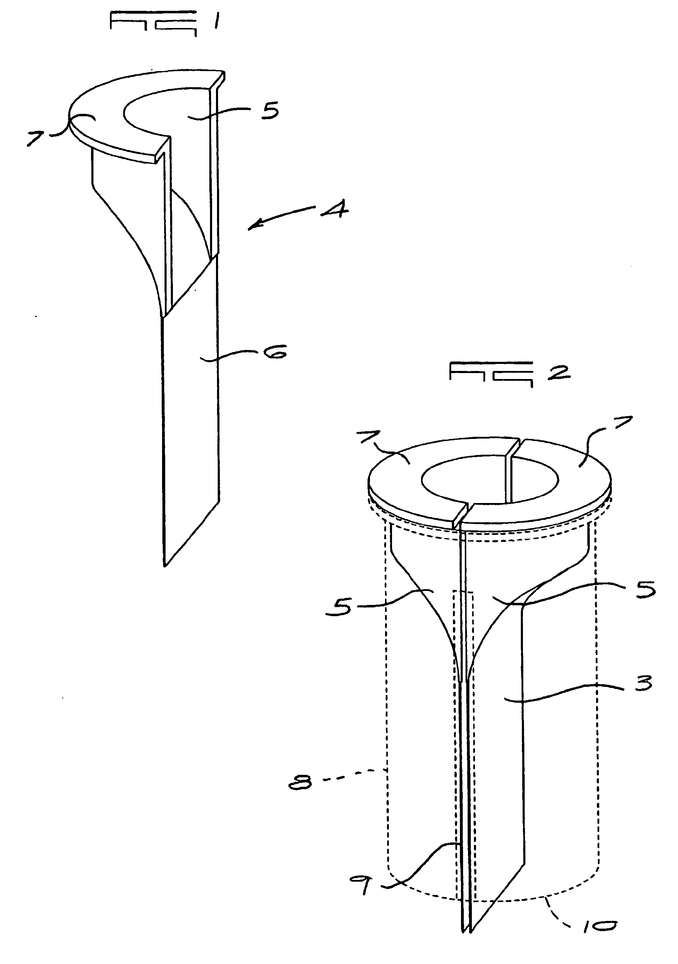

In the drawings
- Fig 1: shows a perspective view of one component of the valve.
- Fig 2: shows a pair of components secured together and located in a supporting table.
- Fig 3: shows details of the valve located in a urinal outlet with controls against inward collapse.
- Fig 4: shows the valve as in Fig 3 with different control means.

As illustrated a urinal (1) has an outlet (2) connected to a sewerage system (not shown). In the outlet is fitted non-return valve (3).

The valve (3) includes a component (4) moulded from suitable plastics or elastomeric material to have one end trough-shaped at (5) and the other as a flexible resilient strip (6) with a high inherent degree of flexibility.

An example of the valve which is not to be considered as limiting the scope of the invention could have the trough (5) starting at a thickness of 0.8 mm blending into a strip 0.2 mm thick.

In use this strip (6) must close against an opposing surface to seal the outlet from the urinal against a reverse flow of gas from the sewerage system.

While a single component (4) can be used it is preferred that the valve consist of two such components (4) secured together along at least the trough-shaped sections (5) which will be sufficiently rigid to be self-supporting.

The securing of the two components can be effected either during the moulding operations in their manufacture or alternatively the edges of the trough-shaped sections can be secured using an appropriate adhesive.

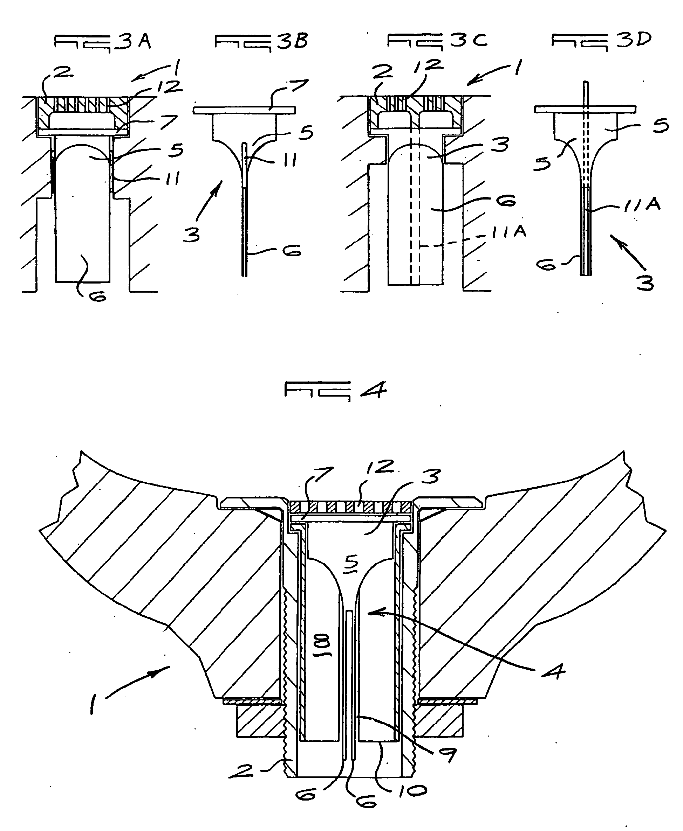

A peripheral outwardly extending supporting flange (7) is provided around the outer ends of the trough sections (5). This flange (7) is used to locate the valve (3) in the urinal outlet. This is shown in Fig. 4.

The necessary sensitivity of the valve for its operation as described below is imparted by strips (6) and because of this the valve (3) is preferably supported in a tube (8). This is shown in Fig. 4 and it will be noted that the tube has slots (9) partway along its length extending from the outlet end (10). The slots (9) are in general alignment with the edges of the strips (6) to facilitate, in use, lateral flow between the strips (6) having a free flow to the outlet This availability for lateral flow is important to ensure there is no build-up of urine solid materials as has occurred with the earlier kinds of valve. The construction becomes self-flushing in use.

Shown in Figs. 3a and 3b is a modification which is preferably incorporated into the construction of the valve to prevent any sudden or large change in pressure across the valve resulting from an increase in the pressure at the outlet causing the strips (6) to collapse longitudinally inwardly. This again has been a problem with earlier designs of urinal valves.

A pair of supporting ribs (11) is provided diametrically opposed to each other at the junction between the trough-shaped sections (5) and the strips (6) and this can form a part of the locating means for the valve (3) in the urinal outlet The assembly will be an alternative to the slotted tube (8) referred to above.

Where the trough (5) carries diametrically opposed ribs the use of adhesive can also be avoided by making the ribs (11) a friction fit within the tube (8) referred to below. Here the ribs (11) will retain the valve components firmly together.

A further alternative is to have a pin from the outlet cover grid (12) engage inside the valve (3) as indicate in Fig 3c and 3d.

The valve is simple to install by removing the outlet cover grid (12) from the outlet; inserting the valve (3) to position the flange (7) on the inner shoulder (13) of the outlet (12). Preferably an appropriate sealant will be used between flange (7) and shoulder (13). The grid (12) is then refitted into the outlet to complete the assembly.

In use urine flows by gravity between the strips (6) into the sewerage system. The flow of this liquid forms a small pressure difference on each side of the strips which has been found in practice to give a positive seal upstream of fluid as it passes through the valve. This seal prevents any malodorous gas escaping by reverse flow through the valve regardless of whether any lateral flow takes place.

The valve is inexpensive to manufacture and trials have shown it to be self cleaning and consequent having a long operative life.

While the valve has particular application to urinals it will be appreciated that it can have other similar applications and the components can be made of varying materials and more robust to meet such applications without departing from the scope of the invention as defined in the appended claims.

## Claims

1. A non-return valve (3), comprising an inlet section (5) in the form of a self-supporting trough-shaped section and an outlet section, the outlet section being made of a flexible resilient material connected to the inlet section 5), whereby the outlet section comprises a flat flexible resilient strip (6) with a high inherent degree of flexibility, the strip (6) being connected with the inlet section (5) at its upper edge; and further comprising a component that is separate from the strip (6) providing a complementary surface against which the lower end of the flexible strip (6) may seal.

2. A non-return valve (3) as claimed in claim 1 **characterised in that** the complementary component is made as a mirror image to an identical construction.

3. A-non-retum valve (3) as claimed in claim 2 **characterised in that** the self-supporting inlet sections (5) are secured together.

4. A non-rebum valve (3) as claimed in claim 3 **characterised in that** the inlet sections (5) are secured together by adhesive.

5. A non-return valve (3) as claimed in claim 2 **characterised in that** the self-supporting inlet sections (5) of the component (4) carry an outwardly extending flange (7).

6. A non-return valve (3) as claimed in claim 2 **characterised in that** control means preventing inward longitudinal collapse of the strips (6) is included.

7. A non-return valve (3) as claimed in claim 6 **characterised in that** the control means comprises a tube (8) flanged at one end and having slots (9) extending partway along its length extending from the free end (10).

8. A non-return valve (3) as claimed in claim 7 **characterised in that** the control means comprises oppositely located outwardly directed ribs (11) from the junction between the trough-shaped section (5) to the flange (7) with the ribs (11) a friction fit into the tube (8).

9. A urinal valve (3) as maimed in claim 2.

10. A urinal including a valve (3) as claimed in claim 2.

## Patentansprüche

1. Rückschlagventil (3) mit einem Einlassabschnitt (5) in Form eines selbsttragenden trogförmigen Abschnittes, und einem Auslassabschnitt, welcher Auslassabschnitt aus einem flexiblen, nachgiebigen, mit dem Einlassabschnitt (5) verbundenen Material hergestellt ist, wobei der Auslassabschnitt einen flachen, flexiblen, nachgiebigen Streifen (6) mit einem hohen inhärenten Grad von Flexibilität aufweist und der Streifen (6) an seinem oberen Ende mit dem Einlassabschnitt (5) verbunden ist; und wobei er ferner eine vom Streifen (6) getrennte Komponente aufweist, welche eine komplementäre Fläche schafft, gegen welche das untere Ende des flexiblen Streifens (6) abzudichten vermag.

2. Rückschlagventil (3) nach Anspruch 1, **dadurch gekennzeichnet, dass** die komplementäre Komponente als Spiegelbild zu einer identischen Konstruktion hergestellt ist.

3. Rückschlagventil (3) nach Anspruch 2, **dadurch gekennzeichnet, dass** die selbsttragenden Einlassabschnitte (5) aneinander befestigt sind.

4. Rückschlagventil (3) nach Anspruch 3, **dadurch gekennzeichnet, dass** die Einlassabschnitte (5) mittels eines Klebers aneinander befestigt sind.

5. Rückschlagventil (3) nach Anspruch 2, **dadurch gekennzeichnet, dass** die selbsttragenden Einlassabschnitte (5) der Komponente (4) einen sich nach aussen erstreckenden Flansch (7) tragen.

6. Rückschlagventil (3) nach Anspruch 2, **dadurch gekennzeichnet, dass** eine Steuereinrichtung umfasst ist, welche ein Einwärtskollabieren der Länge nach der Streifen (6) verhindert.

7. Rückschlagventil (3) nach Anspruch 6, **dadurch gekennzeichnet, dass** die Steuereinrichtung ein an einem Ende mit einem Flansch versehenes Rohr (8) mit Schlitzen (9) aufweist, die sich vom freien Ende (10) weg entlang eines Teils der Länge erstrecken.

8. Rückschlagventil (3) nach Anspruch 7, **dadurch gekennzeichnet, dass** die Steuereinrichtung von der Verbindung vom trogförmigen Abschnitt (5) zum Flansch (7) einander gegenüberliegend angeordnete, nach aussen gerichtete Rippen (11) aufweist, wobei die Rippen (11) eine reibungsschlüssige Einpassung in das Rohr (8) bilden.

9. Urinalventil (3) wie in Anspruch 2 beansprucht.

10. Urinal mit einem Ventil (3) wie in Anspruch 2 beansprucht.

## Revendications

1. Soupape de non-retour (3) comprenant une section d'admission (5) en forme d'une section portant de soi-même en forme d'auge, et une section de sortie, ladite section de sortie étant produite d'une matière flexible attachée à la section d'admission (5), dans laquelle la section de sortie comprend une bande plate flexible souple (6) d'un haut degré de flexibilité inhérente, le bord supérieur de ladite bande (6) étant attachée à la section d'admission (5); et comprenant de plus un composant, séparé de la bande (6), qui présente une surface complémentaire contre laquelle l'extrémité inférieure de la bande flexible (6) peut étancher.

2. Soupape de non-retour (3) selon la revendication 1, **caractérisé en ce que** le composant complémentaire est fait comme une image réfléchie par une construction identique.

3. Soupape de non-retour (3) selon la revendication 2, **caractérisé en ce que** les sections d'admission portant de soi-même (5) sont fixées l'une à l'autre.

4. Soupape de non-retour (3) selon la revendication 3, **caractérisé en ce que** les sections d'admission (5) sont fixées l'une à l'autre par un adhésif.

5. Soupape de non-retour (3) selon la revendication 2, **caractérisé en ce que** les sections d'admission portant de soi-même (5) du composant (4) portent un flasque (7) s'étendant vers l'extérieur.

6. Soupape de non-retour (3) selon la revendication 2, **caractérisé en ce qu'**un moyen de contrôle est prévu, qui empêche l'effondrement des bandes (6) en direction longitudinale.

7. Soupape de non-retour (3) selon la revendication 6, **caractérisé en ce que** le moyen de contrôle comprend un tube (8) ayant un flasque à une extrémité et ayant des fentes (9) s'étendant à partir de l'extrémité libre (10) sur une partie de sa longitude.

8. Soupape de non-retour (3) selon la revendication 7, **caractérisé en ce que** le moyen de contrôle comprend des nervures (11) situées vis-à-vis et dirigées vers l'extérieur à partir de la connexion entre la section en forme d'auge (5) vers le flasque (7), les nervures (11) formant un ajustement fin dans le tube (8).

9. Soupape d'urinoir (3) selon la revendication 2.

10. urinoir comprenant une soupape (3) selon la revendication 2.
